(19) Europäisches Patentamt
European Patent Office
Office européen des brevets

(11) Numéro de publication : **0 032 337**
**B1**

(12)
# FASCICULE DE BREVET EUROPÉEN

(45) Date de publication du fascicule du brevet : **11.05.83**

(51) Int. Cl.³ : **B 23 K 9/09**

(21) Numéro de dépôt : **80401833.1**

(22) Date de dépôt : **19.12.80**

(54) **Procédé de soudage de pièces métalliques.**

(30) Priorité : **27.12.79 FR 7931773**

(43) Date de publication de la demande :
**22.07.81 Bulletin 81/29**

(45) Mention de la délivrance du brevet :
**11.05.83 Bulletin 83/19**

(84) Etats contractants désignés :
**BE DE FR GB IT LU NL**

(56) Documents cités :
**BE A 557 933**
**CH A 557 214**
**GB A 1 106 686**
**US A 2 849 593**
**SCHWEISSEN UND SCHNEIDEN, 11ème année, no. 12, décembre 1959 Düsseldorf DE F. ERDMANN et al. : « Beitrag zur Veränderung des Abschmelzcharakters von ummantelten Elektroden durch den elektrischen Anschlusskreis » Pages 447 et 448**

(73) Titulaire : **LA SOUDURE AUTOGENE FRANCAISE**
**75, Quai d'Orsay**
**F-75321 Paris Cedex 07 (FR)**
**BE DE FR GB LU NL**
**L'AIR LIQUIDE, SOCIETE ANONYME POUR L'ETUDE ET L'EXPLOITATION DES PROCEDES GEORGES CLAUDE**
**75, Quai d'Orsay**
**F-75321 Paris Cedex 07 (FR)**
**IT**

(72) Inventeur : **Blot, Roger**
**9, rue de la Résistance**
**F-95370 Montigny-Cormeilles (FR)**

(74) Mandataire : **Leclercq, Maurice et al**
**L'AIR LIQUIDE SOCIETE ANONYME POUR L'ETUDE ET L'EXPLOITATION DES PROCEDES GEORGES CLAUDE 75, Quai d'Orsay**
**F-75321 Paris Cedex 7 (FR)**

**EP 0 032 337 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

# Procédé de soudage de pièces métalliques

La présente invention concerne un procédé de soudage de pièces métalliques le long d'un joint à l'aide d'une torche non surplombante, c'est-à-dire en soudage dit « vertical montant » qui consiste à souder le long d'un joint vertical, ou en soudage dit en « corniche » qui consiste à souder le long d'un joint horizontal deux pièces agencées verticalement. Un tel procédé du genre mettant en œuvre un arc sous protection gazeuse et un fil-électrode fourré est connu par le document GB-A-1 106 686.

En général, cette technique donne satisfaction lorsqu'on utilise du fil plein, ou du fil fourré dit « rutile », c'est-à-dire un fil dont le fourrage est à base d'oxyde de titane. Dans le cas où l'on désire obtenir à la fois un fort taux de dépôt, une forte pénétration, une limitation des risques de collages et d'inclusions et surtout une valeur élevée de la résilience et cela également à des températures froides, voire très froides, même après traitement thermique de détensionnement, on est conduit obligatoirement à utiliser des fils fourrés dits « basiques ». On rappelle ici succintement que le flux ou fourrage d'un fil fourré comprend :

— les éléments métalliques : Fe, Mn, Si ou un mélange de ceux-ci ; des stabilisants d'arc en petites quantités : alcalins ou alcalins-terreux ;

— les scorifiants qui formeront le laitier.

On distingue généralement différents types de fils fourrés en fonction de la composition du laitier due aux scorifiants utilisés, à savoir :

a) scorifiants riches en rutiles $TiO_2$ : fil « rutile » ;

b) scorifiants riches en $CaF_2$ (spathfluor) : fil basique, dont la composition est la suivante :

— scorifiants $CaF_2$ (50 %)

— autres éléments : $TiO_2$, $SiO_2$, CaO

A titre d'exemple, et en pourcentages pondéraux :

— fourrage :

$CaF_2$ : 55 %
MnO : 12 %
$SiO_2$ : 13 %
Fe
Mn : 20 %
Si

Ces fils sont donc dénommés basiques de par le caractère basique du laitier formé et des scorifiants introduits. Ce caractère est mesuré par des indices tels que :

$$\text{basicité} = \frac{CaO + CaF_2 + 1/2\ (MnO + FeO)}{SiO_2 + 1/2\ (Al_2O_3 + TiO_2 + ZrO_2)}$$

(les valeurs numériques utilisées étant les quantités pondérales des éléments dans le fourrage).

Ainsi, l'indice de basicité du fil fourré « basique » décrit ci-dessus est de 4, alors que pour un fil de type « rutile » cet indice est près de zéro. On peut admettre qu'un fil fourré « basique » est celui pour lequel l'indice de basicité est supérieur à 2. La quantité de fourrage introduite dans le fil pouvant varier suivant les fabricants, la composition du fil (ou de l'électrode) variera correlativement (en particulier le pourcentage en poids de $CaF_2$ dans l'électrode).

La différence entre ces différents types de fils fourrés se retrouve au niveau des caractéristiques mécaniques obtenues, notamment valeur de résilience et caractéristiques de traction : charges à la rupture, limite élastique, allongement, après traitement thermique de détensionnement. Les organismes d'agréation imposent généralement, en fonction du type d'acier soudé :

— une valeur minimum de la résilience,

— une fourchette (en particulier un maximum) de charge à la rupture.

A titre d'exemple, on donne les chiffres comparatifs suivants :

| | Fil basique | Fil rutile |
|---|---|---|
| — Résilience à − 20 °C (daJ/cm$^2$) | | |
| — Brut de soudage | 13 | 6 |
| — Après traitement thermique | 14 | 4 |

On voit donc que seul un fil de type basique permet d'atteindre les valeurs élevées de résilience et c'est la raison pour laquelle, dans certains cas, la mise en œuvre d'un fil « basique » est requise impérativement.

Or, l'expérience a montré qu'un tel fil basique ne peut être utilisé avec la technique usuelle de soudage MIG dans les positions où la torche ne surplombe pas le joint, comme c'est le cas notamment du soudage en « corniche » et en « vertical montant » car la fusion irrégulière d'un tel fil « basique » (en grosses gouttes tourbillonnantes), présente les inconvénients suivants :

— elle ne permet pas une bonne décantation du laitier pour tenir le métal fondu ;

— l'arc erratique s'accroche en divers points du métal fondu et chauffe l'ensemble du bain de soudure, le rendant plus fluide ;

— les grosses gouttes obtenues sont incontrôlables et apportent un métal chaud en des points divers, fluidifiant également l'ensemble du bain de soudure.

La seule façon de pallier cet inconvénient est l'utilisation d'une électrode enrobée, ce qui conduit à une opération manuelle onéreuse. La présente invention vise à assurer le résultat escompté en mettant en œuvre un fil-électrode à caractère basique et un procédé de soudage permettant une grande automaticité, donc une grande économie.

Selon l'invention, dans un procédé mettant en œuvre un arc sous protection gazeuse et un fil-électrode fourré :

a) l'arc est du type « pulsé » à impulsions à fréquence constante et transfert de fusion à chaque impulsion, sans formation de court-circuit, c'est-à-dire du type « spray-arc » ;

b) le fil-électrode fourré est de nature basique.

L'expérience montre que ce compromis très spécifique permet d'obtenir, dans les positions de soudage considérées, un bain de soudure stable et, grâce à l'utilisation de fils fourrés basiques, une résilience élevée. La technique de soudage MIG « pulsé » est directement responsable d'un tel résultat. On rappelle que ce procédé consiste généralement à établir soit avec deux générateurs, soit avec un générateur commandé électroniquement, un arc dont le courant est formé d'un courant de base d'intensité substantiellement constante, mais présentant des points de surintensité ou pulsions, généralement en forme de demi-ondes qui se succèdent régulièrement à une fréquence constante, généralement celle du réseau de distribution, avec maintien dudit courant de base constant entre deux ondes successives. Un tel procédé est décrit dans la publication « SCHWEISSEN UND SCHNEIDEN », décembre 1959, pages 447-448, (notamment page 448 paragraphe 3.1) mais le fil-électrode préconisé est du type fourré à base de $TiO_2$ donc de nature « rutile » qui présente l'inconvénient mentionné plus haut.

Il y a lieu de noter que l'arc pulsé utilisé ici, ou « spray arc », contrairement au « short arc », ne produit aucun court-circuit entre électrode et bain de soudure. Le mode de soudage selon l'invention permet le détachement d'une ou deux gouttelettes résultant de la fusion de l'extrémité du fil-électrode à chaque demi-onde de surintensité, tandis que le courant constant entre deux ondes successives assure la phase préparatoire de fusion de l'extrémité de l'électrode.

Ce procédé dit « MIG arc pulsé » est actuellement exclusivement utilisé pour le soudage d'aciers faiblement alliés et d'alliages légers d'épaisseurs très faibles, à l'aide de fils pleins, de fort diamètre, assurant ainsi un fort dépôt de métal d'apport dans un bain qui reste à une température pas trop élevée, grâce à quoi le bain de fusion est stable. C'est le mérite essentiel de la présente invention d'avoir su discerner que ce procédé « MIG arc pulsé », utilisé avec succès dans un nombre très limité d'applications pouvait permettre de résoudre le problème posé depuis fort longtemps et non résolu à ce jour, de l'automaticité du soudage en « corniche » ou en « vertical montant » et cela avec une mise en œuvre d'un fil fourré de nature basique.

La fusion obtenue, dite aussi fusion axiale, de type « spray arc » permet en effet de concentrer l'énergie sur une zone ponctuelle et de laisser le reste du bain de soudure se refroidir. Le bain de soudure est donc plus froid que lors de la fusion d'un fil basique en soudage classique MIG.

On a ainsi réalisé différentes opérations de soudure et l'on signale, à titre d'exemple, la modalité opératoire suivante :

— soudage « en vertical montant », en automatique ou manuel, et avec chanfrein, de tôles de fortes épaisseurs supérieures à 25 mm, à l'aide d'un arc pulsé dont l'intensité constante s'établit à 100 A avec des pulsions de 340 A.

Le diamètre optimal d'un tel fil basique pour une fréquence de pulsation de 50 Hz est de 1,6 mm. Cette fusion axiale de type « spray arc » que l'on recherche fournit un diamètre de goutte proche du diamètre du fil ; à titre d'exemples :

| Fil (diamètre mm) | Type transfer | Vitesse de fusion du fil m/mn | Intensité moyenne (Ampères) |
|---|---|---|---|
| 1,6 | 1 goutte par impulsion | 3,2 à 4,2 | 200-260 |
| 1,2 | 1 goutte par impulsion | 2,4 à 3,1 | 120-140 |
| 1,2 | 2 gouttes par impulsion | 4,8 à 6,2 | 180-220 |

Ces vitesses de fil fourré basique de diamètre 1,6 m/m correspondent à celles actuellement utilisées avec des fils « rutiles » soudant en position et conduisant à des taux de dépôt maximaux. Avec un diamètre de 1,2 mm, il faut deux gouttes par impulsion pour obtenir une quantité de métal fondu identique.

La fusion d'un fil basique sans pulsation de courant, c'est-à-dire une fusion par courts circuits type « Short Arc », fournit, avec des paramètres voisins, une fréquence de dépôt de gouttes de 20 Hz (vitesse

fil 3,1 m/mn – 180 $A_i$), par conséquent des gouttes beaucoup plus grosses.

En résumé, l'utilisation d'un courant pulsé avec un fil fourré de caractère basique permet :

— de souder en position « vertical montant » et en « corniche », car la régularité de la fusion obtenue permet une excellente tenue du bain ;

— d'effectuer des passes de pénétration sans support envers, pour la raison invoquée ci-dessus ;

— de garantir pour les dépôts ainsi obtenus les avantages du fil fourré basique :

— fort taux de dépôt et forte pénétration ;

— risques limités de collages et d'inclusions ;

— valeurs élevées de résilience.

— d'avoir un coût d'exploitation notablement plus bas qu'avec une électrode de même nature.

**Revendications**

1. Procédé de soudage de pièces métalliques le long d'un joint avec une torche non surplombante, par exemple soudage dit « en corniche » et soudage dit en « vertical montant », du genre mettant en œuvre un arc sous protection gazeuse et un fil-électrode fourré, caractérisé par la combinaison suivante :

a) l'arc est du type « pulsé » à impulsions à fréquence constante et transfert de fusion à chaque impulsion, sans formation de court-circuit, c'est-à-dire du type « spray-arc ».

b) le fil-électrode fourré est de nature basique.

2. Procédé de soudage selon la revendication 1, caractérisé en ce qu'on utilise un fil fourré basique ayant un diamètre de l'ordre de 1,6 mm avec un courant de soudage moyen de 200 à 260 Ampères.

3. Procédé de soudage selon la revendication 1, caractérisé en ce qu'on utilise un fil fourré basique ayant un diamètre de l'ordre de 1,2 mm et un courant de soudage moyen de 120 à 140 Ampères.

4. Procédé de soudage selon la revendication 1, caractérisé en ce qu'on utilise un fil fourré basique ayant un diamètre de l'ordre de 1,2 mm et un courant de soudage moyen de 180 à 220 Ampères.

**Claims**

1. Process for welding metallic work pieces along a joint with a torch which is not overhanging, for example a so called « butt weld in the horizontal-vertical position » and « upward welding in the vertical position », using an arc under gaseous protection and a filling wire electrode, characterized by the following combination :

a) The arc is of the type « pulsed » with pulses with a constant frequency and melt transfer at each pulse, without forming short circuit, i.e. of the « spray-arc » type,

b) the fill wire electrode is of basic nature.

2. Process for welding according to claim 1, characterized by that a basic fill wire is utilized having a diameter in the order of 1,6 mm with an average welding current of 200 to 260 Ampère.

3. Process for welding according to claim 1, characterized by that a basic fill wire is used having a diameter in the order of 1,2 mm and an average welding current of 120 to 140 Ampère.

4. Process for welding according to claim 1, characterized by that a basic fill wire is used having a diameter in the order of 1,2 mm and an average welding current of 180 to 220 Ampère.

**Ansprüche**

1. Verfahren zum Schweißen von Metallstücken längs einer Naht mit einem nicht überhangenden Brenner, beispielsweise zum « waagerechten Schweissen an senkrechter Wand » und « vertikal steigenden Schweissen, bei welchem man einen Bogen unter Gasschutz und eine Fülldrahtelektrode verwendet, gekennzeichnet durch die folgende Kombination :

a) der Bogen ist von der Art eines « Impulslichtbogens » mit Impulsen mit einer konstanten Frequenz und Schmelzübertragung bei jedem Impuls, ohne Bildung von Kurzschluß, d. h. von der Art eines « Sprühlichtbogens »,

b) die Fülldrahtelektrode ist von basischer Beschaffenheit.

2. Verfahren nach Anspruch 1, dadurch gekennzeichnet, daß man einen basischen Fülldraht verwendet, der einen Durchmesser in der Größenordnung von 1,6 mm hat mit einem mittleren Schweißstrom von 200 bis 260 Ampère.

3. Verfahren nach Anspruch 1, dadurch gekennzeichnet, daß man einen basischen Fülldraht verwendet, der einen Durchmesser in der Größenordnung von 1,2 mm hat und einen mittleren Schweißstrom von 120 bis 140 Ampère hat.

4. Verfahren nach Anspruch 1, dadurch gekennzeichnet, daß man einen basischen Fülldraht verwendet mit einem Durchmesser in der Größenordnung von 1,2 mm und einem mittleren Schweißstrom von 180 bis 220 Ampère.